# EUROPEAN PATENT SPECIFICATION

(11) **EP 0 774 402 B1**
(45) Date of publication and mention of the grant of the patent: **08.11.2000**
(21) Application number: 96118165.8
(22) Date of filing: 13.11.1996
(51) Int. Cl.: B62D 35/00

(54) **Air stabilizer device for bluff road vehicles**
Aerodynamischer Stabilisator für Strassenfahrzeuge mit herausragendem Aufbau
Stabilisateur aérodynamique pour véhicules routiers à carrosserie proéminente

(30) Priority: 18.11.1995 GB 9523644
(43) Date of publication of application: 21.05.1997
(73) Proprietor: Wasley, Bernard John, Selly Oak, Birmingham B29 4JJ (GB)
(72) Inventor: Wasley, Bernard John, Selly Oak, Birmingham B29 4JJ (GB)

(56) References cited:
- DE-A- 2 949 128
- GB-A- 2 275 234
- US-A- 3 929 369

## Description

This invention relates to a vehicle stabilizer device for reducing drag on bluff vehicles. It has been made to overcome the problem of downward, sideways and frontal wind pressure resistance which all types of vehicle/trailer have to overcome.

Such a device is known from GB-A-2275234 which discloses a vehicle stabilizer device for a bluff fronted vehicle having a forward facing generally vertically disposed bluff surface. The device comprises a plurality of angled fins for mounting in front of the bluff surface in spaced relation to the bluff surface so as to define gaps between said fins and said bluff surface which gaps allow the air to pass through, the air being directed downwards. The fins are mounted in horizontal rows.

The vehicle stabilizer device according to the invention is defined in claim 1. Further advantageous features of the device are recited in the dependent claims.

This invention consists of a set of fins which are designed to allow the vehicle to remain stable by overcoming wind pressure resistance from all directions. This is done by angling the fins. The top fin cuts into the wind pressure first and this in turn speeds up the flow of air both downwards and sideways to the fins. A variable amount of fins can be used on this air stabilizer. The gaps between the fins are designed to allow a free flow of air from any direction.
Pressure is taken off the bluff front stabilizing the vehicle resulting in lighter steering and reduced tyre wear, producing a saving in vehicle operating costs.

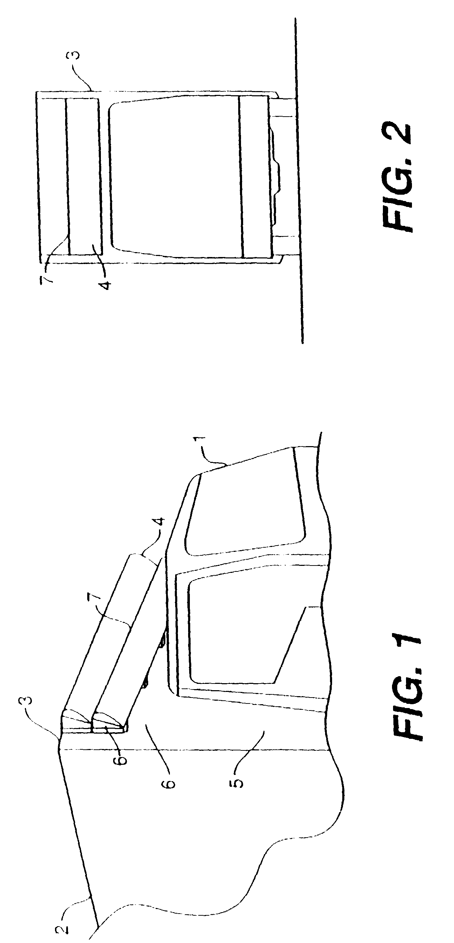

Further details, benefits and advantages of the invention will be understood from the following description of exemplary embodiments with reference to the accompanying drawings wherein:-
FIGURE 1 is a perspective view of a vehicle having a forward facing generally vertically disposed bluff surface provided with a stabilizer device embodying the invention arranged to direct the airflow sideways and downwards;
FIGURE 2 is a front view of the vehicle shown in Figure 1;

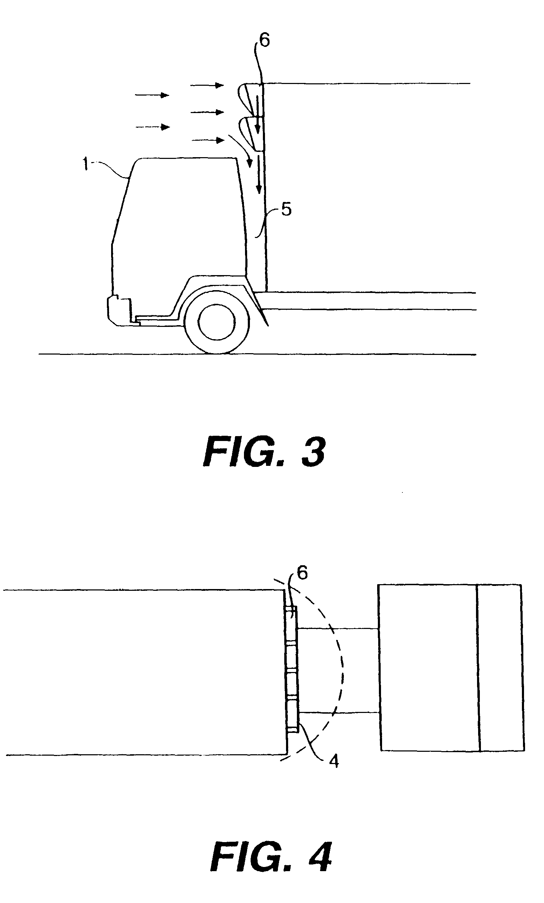

FIGURE 3 is a side view of the vehicle shown in Figures 1 and 2 indicating the direction of airflow created by the device;
FIGURE 4 When fitted to a trailer unit of an articulated vehicle the stabilizer device may be positioned within the turning circle;

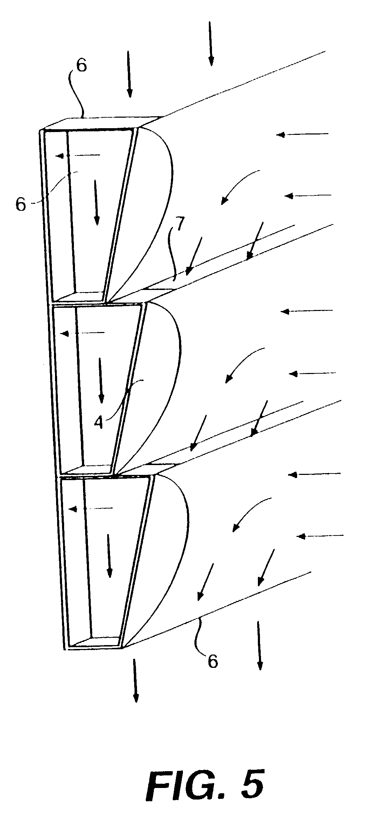

FIGURE 5 is a section to an enlarged scale through the stabilizer device shown in Figures 1 - 3.

The vehicle stabilizer device for a bluff fronted vehicle which has a forward facing generally vertically disposed bluff surface comprises of a set of fins for mounting in front of the bluff surface. This device has a plurality of fins in which gaps allow the air to pass through, facing in the direction of forward movement of the vehicle.
The fins are arranged in horizontal rows.
The total cross section of the gaps allows air movement.
Each fin is attached to a frame which is angled at the front. Each fin is attached to a different size frame to form a group. Large frame at the top of the unit, small frame at the bottom of the unit.
The front of the units are angled and the top unit is forwarded to form a wedge shape.
The stabilizer device is arranged to extend substantially the full width and height of the bluff surface.

## Claims

1. A vehicle stabilizer device for a bluff fronted vehicle having a forward facing, generally vertically disposed bluff surface, said device comprising of a plurality of angled fins for mounting in front of the bluff surface in spaced relation to the bluff surface so as to define gaps between said fins and said bluff surface, which allow the air to pass through, the air being directed downwards, said fins being mounted in horizontal rows, wherein each fin is attached to a frame which is angled at the front, each fin is attached to a different size frame to form a group, larger frame at the top of the device, smaller frame at the bottom of the device.

2. A device according to Claim 1 wherein the total cross section of the gaps allows air movement.

3. A device according to Claim 2 wherein the front of the device is angled and the top of the device is forwarded to form a wedge shape.

4. A device according to any one of the preceding claims arranged to extend substantially the full width and height of the bluff surface.

## Patentansprüche

1. Fahrzeugstabilisator für ein Fahrzeug mit stumpfem Vorbau mit einer nach vorn weisenden, allgemein senkrecht angeordneten stumpfen Oberfläche, wobei die genannte Vorrichtung aus mehreren im Winkel angeordneten Rippen zum Einbau vor die stumpfe Fläche im Abstand von der stumpfen Fläche angeordnet ist, um Lücken zwischen den genannten Rippen und der genannten stumpfen Fläche zu bilden, durch die Luft strömen kann, wobei die Luft abwärts geleitet wird und die Rippen in waagerechten Reihen sind und jede Rippe an einem vorne angewinkelten Rahmen an einem Rahmen einer anderen Größe angeordnet ist, so daß sich eine Gruppe bildet, mit dem größeren Rahmen oben an der Vorrichtung und dem kleineren Rahmen unten.

2. Vorrichtung nach Anspruch 1, bei der der Gesamtquerschnitt der Lücken das Durchströmen von Luft ermöglicht.

3. Vorrichtung nach Anspruch 2, bei der die Vorderseite der Vorrichtung gewinkelt und der obere Teil der Vorrichtung nach vorn ausgebildet ist, so daß eine Keilform entsteht.

4. Vorrichtung nach einem der vorstehenden Ansprüche, die so angeordnet ist, daß sie sich im wesentlichen über die ganze Breite und Höhe der stumpfen Fläche erstreckt.

## Revendications

1. Dispositif de stabilisation de véhicule pour véhicule à avant plat ayant une surface plate disposée de manière générale verticalement, faisant face à l'avant, ledit dispositif étant composé d'une pluralité d'ailettes inclinées destinées à être montées devant la surface plate en une relation espacée par rapport à la surface plate de manière à définir des espaces entre lesdites ailettes et ladite surface avant plate, lesquelles permettent le passage d'air à travers elles, l'air étant dirigé vers le bas, lesdites ailettes étant montées en rangées horizontales, dans lequel chaque ailette est fixée à un cadre qui est incliné à l'avant, chaque ailette est fixée à un cadre de taille différente en vue de former un groupe, le plus grand cadre en haut du dispositif, le plus petit cadre en bas du dispositif.

2. Dispositif selon la revendication 1, dans lequel la section transversale totale des espaces permet un déplacement d'air.

3. Dispositif selon la revendication 2, dans lequel l'avant du dispositif est incliné et le haut du dispositif est avancé en vue de former une forme de coin.

4. Dispositif selon l'une quelconque des revendications précédentes, disposé en vue de s'étendre sensiblement sur toute la largeur et la hauteur de la surface plate.
